Europäisches Patentamt

European Patent Office

Office européen des brevets

(19)

(11) Publication number: **0 221 760**
A2

(12) **EUROPEAN PATENT APPLICATION**

(21) Application number: 86308398.6

(22) Date of filing: 29.10.86

(51) Int. Cl.⁴: **C 22 B 3/00**
C 22 B 34/32, C 22 B 21/00
C 22 B 30/06, C 22 B 58/00

(30) Priority: 01.11.85 US 794106

(43) Date of publication of application:
13.05.87 Bulletin 87/20

(84) Designated Contracting States:
BE DE ES FR GB

(71) Applicant: MONTANA TECH FOUNDATION
West Park Street
Butte Montana 59701(US)

(72) Inventor: Twidwell, Larry G.
54 Apple Orchard road
Butte Montana(US)

(72) Inventor: Robins, Robert G.
25 Adelaide Avenue
Lindfield Sydney New South Wales 2070(US)

(72) Inventor: Dahnke, David R.
720 Zarelda Street
Butte Montana(US)

(74) Representative: Ritter, Stephen David et al,
Mathys & Squire 10 Fleet Street
London EC4Y 1AY(GB)

(54) Method for recovering metal values from mixed-metal aqueous solutions by selective phosphate precipitation.

(57) A method is provided for recovering metal value from a mixed-metal aqueous solution by selective phosphate precipitation comprising adjusting the pH of the solution to be below a predetermined pH level at which level the metal value to be removed will not be precipitated; adding to the solution stoichiometric multiples of phosphate to precipitate the metal value to be removed at the predetermined pH level; maintaining the temperature of the solution at a predetermined constant level of precipitating the metal value; increasing the pH of the solution to the predetermined pH level to precipitate the phosphate of the metal value to be removed; maintaining the pH of the solution at the predetermined pH level.

EP 0 221 760 A2

Croydon Printing Company Ltd.

METHOD FOR RECOVERING METAL VALUES FROM MIXED-METAL
AQUEOUS SOLUTIONS BY SELECTIVE PHOSPHATE PRECIPITATION

This invention relates to a process for recovering
metal values from mixed-metal aqueous solutions by selective
phosphate precipitation.

This process is based upon the relative solubilities
of metal phosphates which in turn are dependent on solution
pH, solution temperature, and phosphate and metal ion
concentrations.

The importance of this invention is not only that
metals can be removed selectively from mixed metal solutions
but also that the solid precipitates formed by utilizing this
process are easily separable by conventional solid/liquid
separation techniques such as filtration.

This invention is applicable to a variety of metal
bearing solutions. Separations can easily be made between
ions of different valence states. For example trivalent
cations can be separated selectively from divalent cations
and from monvalent cations. Possible separations include:
removal of each or all of the trivalent cations, Cr, Al, Fe,
Bi and Ga from each or all of the divalent cations, Zn, Cd,
Fe, Ni, Co, Ca, Mg, Pb and Ba; and removal of each or all of the trivalent cations, Cr, Al, Fe, Bi, and Ga, from each or all of the monovalent cations, K, Na, Ag, and Hg.

The process described can be applied to metal bearing leach solutions where the lixivant is a sulfate, or a nitrate, or a chloride, or mixtures of these solutions; to metal bearing industrial process streams; and to spent process solutions. With respect to leach solutions, the invention can be applied to solutions resulting from the leaching of ores, concentrates, residues, sludges, and metal bearing scrap.

One of the primary uses of the present invention could be the removal of iron from industrial solutions where it is necessary to remove iron from an industrial solution prior to other processing stages. In using this process, ferric iron can be lowered to a few mg/liter in the presence of high concentrations of, Zn, or Cd, or Ni, or Co, or Ca or Mg (or combinations of these divalent cations).

A common method of separating iron from an iron-zinc solution in a zinc production plant is the conventional Jarosite method such as described in Australian Patent No. 401,724. In this process the residue of the zinc production plant, which residue contains zinc ferrite, is first leached with sulfuric acid. The leach solution is then heated in the presence of sodium, potassium and/or ammonium ions so that the ferric iron is precipitated as an insoluble double sulphate of the jarosite type. The purified leach solution is then separated from the precipitated iron compound by conventional liquid/solid separation techniques.

The advantages of the present invention over the Jarosite method are:

1.  Greater selectivity for removing ferric iron from

2

zinc ions, that is, less loss of zinc in the iron residue.

2.    Shorter residence times, for example, 0.5 - 1 hours compared to 6 - 8 hours.

3.    Lower solution temperatures, for example, 50° C compared to 80 - 90° C.

4.    The minimum ion concentration attainable utilizing Jarosite precipitation is 0.4 - 0.2 gpl.  With the present invention using phosphate precipitation the ion concentration can be reduced to 0.1 - 0.05 gpl.

5.    Ferric phosphate can be converted to ferric hydroxide which results in recovery of the phosphate reagent and production of an environmentally non-toxic material.


## SUMMARY OF THE INVENTION

In accordance with one aspect of this invention, there is provided a process wherein metal values can be recovered from mixed-metal aqueous solutions by selective phosphate precipitation by increasing the pH of the solution in a controlled manner when the solution has a known phosphate and metal ion concentration and the temperature of the solution is kept approximately constant.  As the pH increases the selected metal ions are selectively precipitated out of the solution as metal phosphate.


## BRIEF DESCRIPTION OF THE DRAWINGS

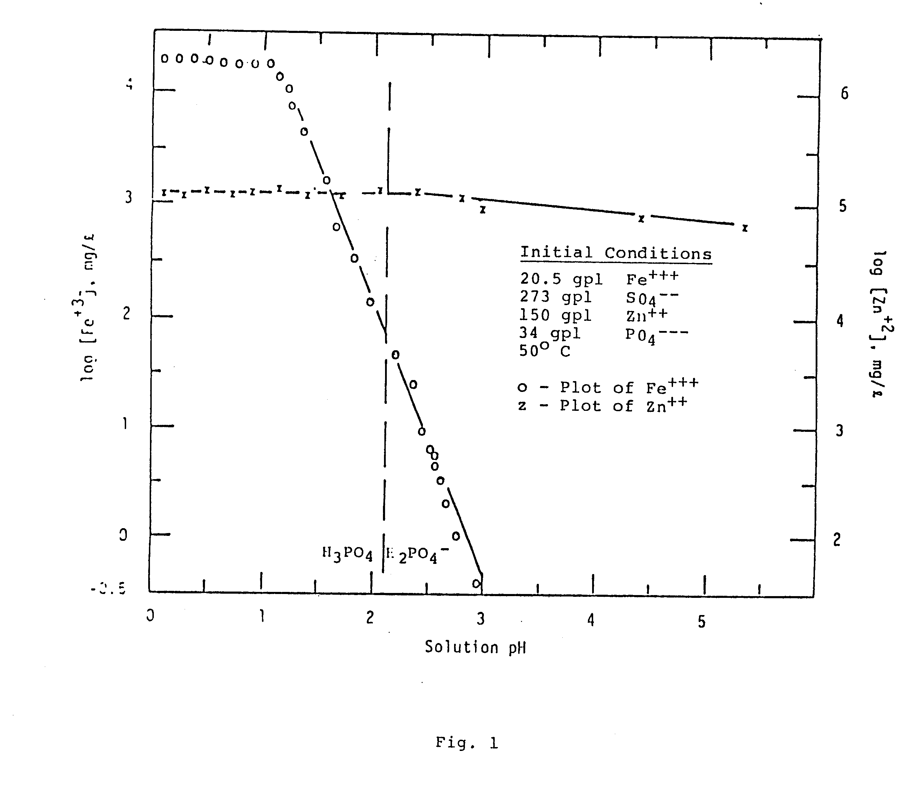

Fig. 1 is a graph illustrating the relationship among zinc concentration, iron concentration and solution pH in Example I set forth hereafter.

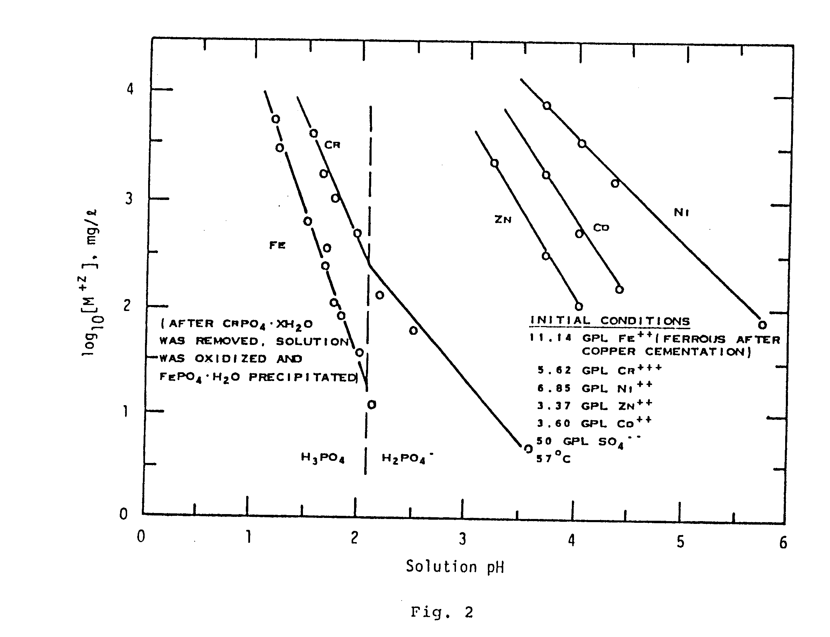

Fig. 2 is a graph illustrating the relationship among iron, chromium, zinc, cadmium and nickel concentration and solution pH in Example II set forth hereafter.

3

DESCRIPTION OF THE PREFERRED EMBODIMENTS

The present process for separating metal values from mixed-metal aqueous solutions by selective phosphate precipitation is based on the relative solubilities of metal phosphates. The solubility of metal phosphates depends upon the solution pH, solution temperature and phosphate and metal ion concentration. Solubility of phosphate compounds decreases with increasing pH, with increasing temperature and with increasing phosphate concentration. Further the solubility of the trivalent cation phosphates (Fe, Cr, Al and Bi) is much less in low pH solutions than is the solubility of the divalent cation phosphates (Zn, Cd, Ni, Co, Ca, Mg). Therefore, by initially maintaining the solution pH at a low level and within a fixed range and then increasing the solution pH in a controlled manner, the less soluble trivalent phosphates can be precipitated in preference to the divalent cations. The trivalent cations can be stripped from the solution as a trivalent phosphate or mixture of trivalent phosphates or in some cases as solid solution phosphates. The trivalent cations, if present individually with divalent cations can be selectively removed by maintaining the solution pH at a low fixed level.

To more fully illustrate this invention, the following detailed examples are presented.

### EXAMPLE I

A major industrial application of this invention is the removal of iron from zinc leach solutions prior to electrolysis for zinc recovery. Iron is effectively stripped by this process from such solutions without appreciable loss of zinc to the solid residue.

4

A zinc-iron bearing solution containing 20.5 gpl $Fe^{(+++)}$, 150 gpl $Zn^{++}$, 273 gpl $SO_4^{--}$, 34 gpl $PO_4^{---}$ at 50°C was subjected to various pH levels by adding sodium hydroxide. At a pH of 1.66 the iron content was decreased to 0.606 gpl; at a pH of 2.46 the iron content was decreased to 0.009 gpl with no loss of zinc to the solid precipitate because the zinc concentration was below the solubility limit of zinc at this pH level. The precipitated product particles were identified by X-ray diffraction to be ferric phosphate. The precipitated product particles were crystalline spherical agglomerates ranging in size from 160-6700 μm. The filterability of these particles was excellent. The solids settled rapidly and the solution could be decanted from the solids. Analyses of a series of wash waters showed complete original solution displacement and analyses of the residue by SEM EDAX and ICP showed less than 1.1 percent zinc contamination.

This example is not meant to imply optimum operating conditions. Effective separation is anticipated at lower temperature, that is, to ambient temperature and at lower phosphate concentrations, i.e., to the stoichiometric requirement to form ferric phosphate. Higher temperatures should be avoided in order not to precipitate jarosite compounds $NaFe_3(SO_4)_2(O_H)_6$, $H_3OFe_3(SO_4)_2(OH)_6$, etc. The correct operating conditions can be optimized for each industrial system.

## EXAMPLE II

In this example, selective separation of iron and chromium from divalent cations such as Zn, Cd, and Ni is illustrated.

3.60 gpl $Cu^{++}$, 6.85 gpl $Ni^{++}$, 3.37 gpl $Zn^{++}$, 3.60 gpl $Cd^{++}$ was prepared by leaching a mixed hydroxide material with sulfuric acid. The solution temperature was 57°C and the resulting solution sulfate concentration was 50 gpl. The copper in the solution was lowered to 32mg/liter by cementation on powdered iron. The iron content after cementation was 11.14 gpl (as $Fe^{++}$ ions).

Two times the stoichiometric amount of phosphate required to precipitate the chromium as $CrPO_4 \cdot nH_2O$ was added to the solution and the pH was raised in increments to precipitate the chromium, e.g., at pH = 1.75 the chromium concentration in the solution was 1.0 gpl; at pH = 2.00 the chromium concentration was 0.30 gpl; at pH = 3.65 the chromium concentration was 0.005 gpl. Other metal species were not precipitated because the concentrations of these other metal species were below their respective solubility limits at these pH levels. The chromium phosphate was filtered from the solution and the phosphate concentration in the solution was raised to two times the stoichiometric requirement for the formation of $FePO_4 \cdot 2H_2O$. Oxygen was bubbled into the solution to oxidize the iron; the solution pH was raised in increments to precipitate the iron; e.g., the iron concentration was 3.0 gpl at pH = 1.25; 0.80 gpl at pH = 1.50, 0.01 gpl at pH = 2.1. Other metal species were not precipitated. The iron phosphate was filtered from solution.

## EXAMPLE III

A third illustration is the coremoval of iron and chromium from a solution containing divalent cations.

A solution containing 3.50 gpl $Fe^{+++}$, 5.93 gpl $Cr^{+++}$, 6.49 gpl $Ni^{++}$, and 8.08 gpl $Zn^{++}$, was prepared by leaching a mixed metal hydroxide material with sulfuric acid. The sulfate concentration was 40 gpl. The stoichiometric phosphate required to precipitate the chromium and iron was added to the solution and the pH was raised in increments to precipitate an iron and chromium phosphate, e.g., at pH = 1.74 the chromium concentration was 1.02 gpl, the iron concentration was 0.10 gpl; at pH = 2.13 the chromium concentration was 0.153 gpl, the iron concentration was 0.01 gpl; at pH = 2.53 the chromium concentration was 0.08 gpl, the iron concentration was 0.007 gpl. The solid was uncontaminated by Zn, Ni, or Cd. Since the phosphate precipitations were well developed agglomerated crystalline spherical particles, the solid/liquid separation was effective and surface adsorption of other cations was minimized.

In practice the pH of the mixed metal solution is initially maintained at a low level so that precipitation of the selected metal value will not occur. To this solution is added stoichiometric multiples of phosphate. The particular amount added is determined for each particular solution system to be appropriate to precipitate out the selected metal values at a predetermined pH level also determined for each particular solution system. The temperature of the solution is maintained at a level appropriate for the selected metal value to be removed. The pH of the solution is then increased to the predetermined pH level whereby the metal value to be removed is precipitated as a phosphate. The pH level at which precipitation is to occur, the temperature of the solution at which precipitation will occur and the phosphate concentration necessary for precipitation are all empirically determined for each

7

solution system. Once these parameters are known, the above described method provides a much needed method for removing selected metal values from a mixed-metal aqueous solution and can be used to decrease the metal values to as low a level as desired.

While the fundamental novel features of the invention have been shown and described, it should be understood that various substitutions, modifications and variations may be made by those skilled in the art without departing from the spirit or scope of the invention. Accordingly, all such modification and variations are included in the scope of the invention as defined by the following claims:

We Claim:

1. A method for recovering a metal value from a mixed-metal aqueous solution by selective phosphate precipitation comprising:

    a) adjusting the pH of the solution to be below a predetermined pH level at which level the metal value to be removed will not be precipitated;

    b) adding to the solution stoichiometric multiples of phosphate to precipitate the metal value to be removed at the predetermined pH level;

    c) maintaining the temperature of the solution at a predetermined constant level for precipitating the metal value;

    d) increasing the pH of the solution to the predetermined pH level to precipitate the phosphate of the metal value to be removed.

    e) maintaining the pH of the solution at the predetermined pH level.

2. The process according to claim 1 wherein the metal values to be removed include the trivalent cations selected from the group Cr, Al, Fe, Bi and Ga and the metal values remaining in solution are selected from the group of divalent cations including Zn, Fe, Cd, Ni, Co, Ca, Mg, Pb and Ba.

3. The method according to claim 1 wherein the metal values to be removed are selected from the group of trivalent cations including Cr, Al, Fe, Bi and Ga and the metal values remaining in solution are selected from the group of monovalent cations including K, Na, Ag and Hg.

4. The method according to any preceding claim wherein the predetermined pH level lies within the range 0.7 to 2.0.

5. The method according to any preceding claim wherein the pH of the solution is increased by adding a caustic solution.

- 9 -

Fig. 1

Fig. 2